Europäisches Patentamt

European Patent Office

Office européen des brevets

Veröffentlichungsnummer: **0 298 313**
**A2**

# EUROPÄISCHE PATENTANMELDUNG

Anmeldenummer: 88110046.5

Int. Cl.⁴: **B05B 13/04**

Anmeldetag: **23.06.88**

Priorität: **09.07.87 DE 3722734**

Veröffentlichungstag der Anmeldung:
**11.01.89 Patentblatt 89/02**

Benannte Vertragsstaaten:
**BE CH DE FR GB IT LI NL SE**

Anmelder: **BEHR-INDUSTRIEANLAGEN GMBH & CO.**
**Talstrasse 14**
**D-7121 Ingersheim 1(DE)**

Erfinder: **Handke, Heinz**
**Fasanenweg 8**
**D-7121 Gemmrigheim(DE)**
Erfinder: **Zink, Thomas**
**Verdistrasse 31**
**D-7000 Stuttgart 1(DE)**
Erfinder: **Sougioltzis, Vasilios**
**Felsenkellerweg 7**
**D-7120 Bietigheim-Bissingen(DE)**

Vertreter: **Heusler, Wolfgang, Dipl.-Ing. et al**
**Dr. Dieter von Bezold Dipl.-Ing. Peter Schütz**
**Dipl.-Ing. Wolfgang Heusler Brienner Strasse 52**
**D-8000 München 2(DE)**

Verfahren und Anlage zum serienweisen Beschichten von Werkstücken.

Bei der serienweisen Beschichtung beispielsweise von Kraftfahrzeugrohkarossen unter Verwendung von Lackierrobotern können sich Beschichtungsfehler aufgrund der Toleranzen ergeben, mit denen die Karossen vom jeweiligen Fördersystem in die Sprühkabine transportiert werden. Zur Lösung dieses Problems wird während eines ursprünglichen Beschichtungsvorgangs die Entfernung zwischen mindestens einem Bezugspunkt und der Karosse gemessen und als Standardmeßwert gespeichert. Beim anschließenden Serienbetrieb wird dann die betreffende Entfernung jeweils erneut gemessen und mit dem Standardmeßwert verglichen. In Abhängigkeit von den festgestellten Abweichungen kann dann das Bearbeitungsprogramm entsprechend korrigiert werden.

FIG. 1

## Verfahren und Anlage zum serienweisen Beschichten von Werkstücken.

Die Erfindung betrifft ein Verfahren gemäß dem Oberbegriff des Anspruchs 1 sowie eine Beschichtungsanlage zum Durchführen dieses Verfahrens.

Es ist bekannt, zu beschichtende Fahrzeugrohkarossen serienweise durch Sprühkabinen zu fördern, in denen vorprogrammierte Lackierroboter od.dgl. selbsttätig eine Sprühvorrichtung an der Karosse entlang bewegen. Das Bearbeitungsprogramm wird üblicherweise im Teach-in-Verfahren beim Beschichten einer zu diesem Zweck in die Kabine gebrachten Karosse erstellt. Da bei der anschliessenden programmgesteuerten Serienbeschichtung vorausgesetzt wurde, daß die Karossen in der gleichen Position bezüglich der Sprühvorrichtungen durch die Sprühkabine gefördert werden wie bei dem ursprünglichen Teach-in-Betrieb, bemühte man sich um eine möglichst genaue Positionierung.

In der Praxis zeigt sich aber, daß erhebliche Positionstoleranzen beispielsweise der auf den Wagen (den sogenannten Skids) eines Bodenfördersystems und in noch stärkerem Maße der an einem Hängeförderer transportierten Karossen bezüglich der Sprühvorrichtungen nicht oder allenfalls mit untragbarem Aufwand vermieden werden können. Die entsprechenden Beschichtungsfehler aufgrund der jeweiligen Positionsabweichungen wurden als unvermeidbar in Kauf genommen.

Der Erfindung liegt die Aufgabe zugrunde, ein insbesondere zum Beschichten von Fahrzeugkarossen mit einem Lackierroboter od. dgl. geeignetes Verfahren bzw. eine entsprechende Beschichtungsanlage zu schaffen, womit auf einfache Weise Toleranzen der Position des zu beschichtenden Werkstücks bezüglich der Beschichtungsvorrichtung ausgeglichen werden können.

Diese Aufgabe wird durch das im Anspruch 1 gekennzeichnete Verfahren gelöst.

Die Erfindung hat den Vorteil, daß eine stets gleichbleibende fehlerfreie Beschichtung von Werkstücken wie z.B. Fahrzeugkarossen gewährleistet wird, ohne daß man sehr genau auf eine gleichbleibende Relativposition zwischen den Werkstücken und den Beschichtungsvorrichtungen achten muß. Dadurch können u.a die Präzisionsanforderungen an das jeweils verwendete Fördersystem herabgesetzt werden.

An einem Ausführungsbeispiel wird die Erfindung im folgenden näher erläutert.

In der Zeichnung zeigen:

Fig. 1 eine Draufsicht auf zwei Kraftfahrzeugkarossen in einer Sprühkabine;

Fig. 2 eine Seitenansicht der in der Sprühkabine gemäß Fig. 1 vermesssenen Karosse; und

Fig. 3 eine Rückansicht der Karosse gemäß Fig. 2.

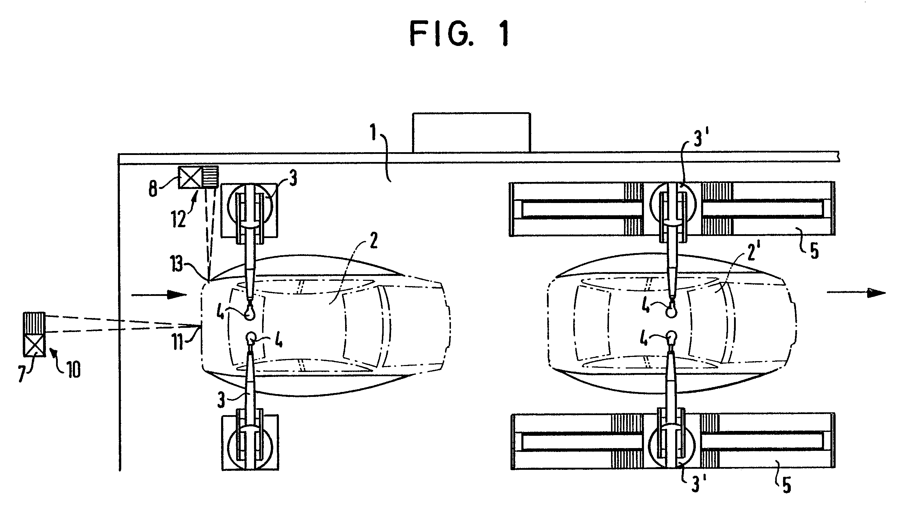

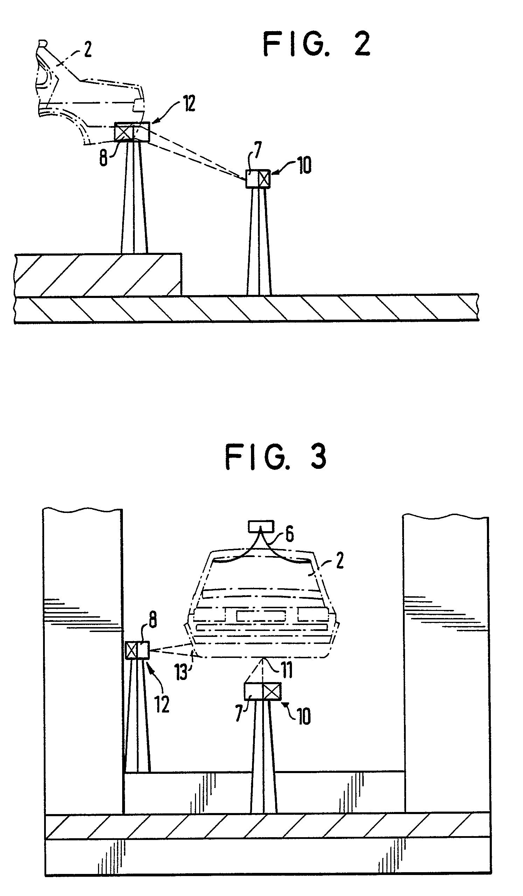

In die in Fig. 1 dargestellte Sprühkabine 1 werden serienweise zu beschichtende Fahrzeugrohkarossen 2.2' in bekannter Weise beispielsweise von einem Hängeförderer gebracht, der in Fig. 3 bei 6 angedeutet ist. Der Hängeförderer kann taktweise längs der dargestellten Pfeile arbeiten, so daß die Karossen zunächst eine erste Beschichtungsstation erreichen, wo sie für eine vorgebene Bearbeitungsdauer verweilen (Karosse 2), dann zu einer zweiten Beschichtungsstation transportiert werden (Karosse 2') mit derselben Verweildauer und schließlich am anderen Ende wieder aus der Sprühkabine 1 herausbewegt werden. An der ersten Station werden bestimmte Stellen der Karossen 2 von Lackierrobotern 3 beschichtet, die mit elektrostatischen Sprühvorrichtungen 4 versehen sein können und bei dem dargestellten Beispiel in Förderrichtung ortsfest installiert sind. An der zweiten Beschichtungsstation installierte weitere Lackierroboter 3' können dagegen parallel zur Förderrichtung auf Schienen 5 od. dgl. an den stillstehenden Karossen 2' entlanggefahren werden. Selbstverständlich sind beliebige andere Anordnungen von Lackierrobotern und weitere Beschichtungsstationen möglich. Ferner besteht in anderen Fällen die Möglichkeit, die Karossen nicht taktweise, sondern kontinuierlich durch eine oder alle Beschichtungsstationen hindurchzubewegen.

Zum Programmieren der Lackierroboter 3,3' ist es üblich, vor dem Serienbetrieb zunächst eine Musterkarosse in und durch die Sprühkabine zu bewegen und an den einzelnen Beschichtungsstationen durch manuelle Steuerung der Lackierroboter und ihrer Sprühvorrichtungen zu beschichten, wobei die jeweils auszuführenden Bewegungsbahnen der Sprühvorrichtungen ausgehend von einer gegebenen Bezugsstellung und im Teach-In-Verfahren zu zweckmäßig gewählten Karosseriepunkten die jeweils erforderlichenund zu ändernden Beschichtungsparameter wie z.B. Lackmenge, Steuerluft usw. gespeichert werden. Die auf diese Weise erstellten Programme steuern dann später die Serienbeschichtung.

Wegen der unvermeidlichen Toleranzen des Fördersystems werden die Karossen 2.2' allerdings beim Serienbetrieb mit mehr oder weniger großen Abweichungen von der Lage, die sie bei der ursprünglichen manuell gesteuerten Beschichtung relativ zu den Bezugsstellungen der Roboter 3,3' hatten, in die Sprühkabine 1 gebracht. Bei diesen Lagefehlern kann es sich um Versetzungen in seitlicher Richtung und/oder in Längsrichtung sowie um Winkelversetzungen bezüglich der Längsrichtung handeln. In manchen Fällen sind auch vertikale Versetzungen möglich.

Damit die hierauf beruhenden Beschichtungsfehler vermieden werden können, soll gemäß dem hier beschriebenen Verfahren die tatsächliche Lage jeder in die Sprühkabine 1 gebrachten Karosse 2 gemessen und mit der bei der ursprünglichen Erstellung der Steuerprogramme gegebenen "idealen" Lage verglichen werden. Zu diesem Zweck wird zunächst bei der ursprünglichen Beschichtung die Entfernung zwischen einer, vorzugsweise aber mindestens zwei räumlich voneinander entfernten ortsfesten und somit auch relativ zu den Bezugsstellungen der Lackierroboter 3,3' definierten Bezugspunkten 10,12 und zweckmässig gewählten, möglichst markanten Punkten oder Stellen 11 bzw. 13 der Karosse 2 mit entsprechenden Meßsystemen 7,8 gemessen und als Standardmeßwert gespeichert.

Die hier gewählte räumliche Anordnung der beiden Meßsysteme 7,8 ist aus Fig.1 in Verbindung mit Fig. 2 und Fig. 3 erkennbar. Demnach verläuft die Meßrichtung vom Bezugspunkt 10 am Meßsystem 7, der sich etwas unterhalb der Karosse 2 etwa in deren mittleren Vertikalebene hinter der Karosse befindet, schräg nach oben zu einer markanten Stelle 11 an der Mitte der hinteren Unterkante der Karosse. Die andere Meßrichtung verläuft dagegen quer hierzu, nämlich von dem seitlich neben der einen seitlichen unteren Ecke der Karosse befindlichen Bezugspunkt 12, also vom Meßsystem 8 zu dieser Ecke.

Bei dem dargestellten Beispiel wird also quer zu der Förderrichtung und in einer zu der Förderrichtung wenigstens annähernd parallelen Ebene gemessen. Die Wahl der Meßrichtungen ist allerdings weitgehend beliebig und von den jeweiligen praktischen Bedingungen abhängig. Eventuell kann die Entfernung von den beiden Bezugspunkten 10,12 zu einem einzigen gemeinsamen Punkt der Karosse gemessen werden. Andererseits kann es je nach den praktischen Gegebenheiten und den möglichen Lageabweichungen sinnvoll sein, mehr als die dargestellten beiden Meßsysteme 7,8 vorzusehen.

Bei dem hier beschriebenen Beispiel kann eine gleichbleibende, stets den ursprünglichen Bedingungen entsprechende vertikale Lage der Karosse vorausgesetzt werden. In anderen Fällen kann es erforderlich sein, Lagefehler nicht nur zwei-, sondern dreidimensional zu ermitteln und bei der Programmsteuerung zu berücksichtigen.

Die erläuterten Messungen werden jedesmal wiederholt, wenn während des Serienbetriebes eine Karosse 2 in die Sprühkabine 1 transportiert wird. Die hierbei gemessenen Entfernungswerte werden mit den ursprünglich gespeicherten Entfernungen verglichen , und in einem mit den Meßsystemen verbundenen Rechner (nicht dargestellt) kann aus den dadurch festgestellten Abweichungen problemlos die genaue Lage der Karosse bezüglich der Roboter 3,3' errechnet werden. Nach allgemein bekannten Rechenregeln ist dies auch dann möglich, wenn die Meßrichtungen beliebig anders verlaufen als bei dem dargestellten Beispiel. Ggf. kann in einem modular aufgebauten System für jedes Meßsystem und/oder jede Beschichtungsstation je ein Rechner vorhanden sein.

Zur Erhöhung der Meßgenauigkeit kann es zweckmässig sein, zum Bestimmen der Abweichung vom Standardmeßwert mehrere Entfernungsmessungen vorzunehmen und hieraus einen Mittelwert zu errechnen. Dies kann durch zeitlich wiederholte Messungen mit demselben Meßsystem und/oder durch Verwendung mehrerer örtlich unterschiedlich angeordneter Meßsysteme erfolgen.

Aufgrund der festgestellten Lageabweichung müssen nun die Arbeitsprogramme der Roboter 3,3' so eingestellt werden, daß sich während der Serienbeschichtung wieder die ursprünglichen Beschichtungsbedingungen ergeben. In vielen Fällen wird es zweckmässig sein, die Bewegungsbahnen der Roboter so zu steuern, daß sich die ursprünglichen Entfernungen zwischen den Bezugs- oder Ausgangspositionen der Sprühvorrichtungen und dem Werkstück ergeben. Da das Fördersystem in der Praxis nicht oder nicht im erforderlichen Maße korrigiert werden kann, wird hierbei also die Bezugsposition (Nullstellung) der Lackierroboter 3,3' zur Berücksichtigung der Lagefehler korrigiert. Dies geschieht in an sich bekannter Weise selbsttätig durch das elektronische Robotersteuersystem aufgrund der von den Meßsystemen bzw. ihrem Rechner gelieferten Daten und kann z.B. durch Anpassung des gegebenen Bewegungsprogramms vor Beschichtungsbeginn erfolgen. Insbesondere kann man verschiedene Bewegungsablaufprogramme im Speicher des Steuersystems zur Verfügung halten, die die unterschiedlichen möglichen Toleranzen des Fördersystems berücksichtigen Aufgrund der ermittelten Lagefehler wird dann das zugehörige Programm durch Ansteuerung ausgewählt und von der Robotersteuerung als Bewegungsablaufprogramm ausgeführt. Die Roboterbahn soll vor dem Programmstart bestimmt sein, da in der Regel keine Online-Änderung möglich ist.

Unter Umständen besteht aber statt einer Anpassung des Bewegungsvorgangs an die Lagefehler auch die Möglichkeit, nur die Beschichtungsparameter selbsttätig beispielsweise an einen zu großen oder zu kleinen Abstand des Werkstücks anzupassen. Vorzugsweise wird die Entfernung unter Verwendung einer Sende- und Empfangsvorrichtung gemessen, welche die Zeit zwischen dem Aussenden und dem Empfang eines von dem Werkstück reflektierten Signals feststellt. Zweckmäßig können hierfür als Meßsysteme 7,8 gepulste Laser-Entfernungsmeßsysteme verwendet werden, die relativ zu den Sockeln der Lackierroboter 3 bzw. zu den Verschiebungsschienen der Roboter 3′ ortsfest an den Bezugspunkten 10,11 montiert sind. Derartige Meßsysteme , die Laufzeitmessungen nach dem Radarprinzip durchführen , sind an sich bekannt. Wie erwähnt, ist die Erfindung nicht auf die dargestellte , zweidimensional in aufeinander senkrechten Richtungen (x, y) arbeitende Meßanordnung beschränkt.

Das hier beschriebene Verfahren ist auch bei Beschichtungsanlagen mit Bodenförderern sinnvoll, da hier zwar die Bewegungsbahn des Förderers selbst als konstant angenommen werden kann, nicht aber die Lage der Werkstücke auf den Förderwagen.

**Ansprüche**

1. Verfahren zum serienweisen Beschichten von Werkstücken, die längs einer vorgegebenen Förderbahn von einer Fördereinrichtung durch eine Beschichtungsstation geführt werden, in der unter Relativbewegung zwischen dem Werkstück und einer insbesondere an einem Industrieroboter montierten Sprühvorrichtung deren Lage bezüglich des Werkstücks von einem gespeicherten Bearbeitungsprogramm gesteuert wird, das zuvor während eines ursprünglichen Beschichtungsvorgangs beim fehlerfreien Beschichten eines Werkstücks erstellt wurde, **dadurch gekennzeichnet,**
daß während des ursprünglichen Beschichtungsvorgangs die Entfernung zwischen mindestens einem Bezugspunkt der Sprühvorrichtung und mindestens einem ausgewählten Punkt des Werkstücks gemessen und als Standardmeßwert gespeichert wird,
daß bei dem anschließenden serienweisen Zuführen des Werkstücks jeweils die Entfernung zwischen dem Bezugspunkt und dem ausgewählten Punkt der Werkstücke erneut gemessen wird und durch Vergleich Abweichungen der Meßwerte von dem gespeicherten Standardmeßwert festgestellt werden,
und daß das Bearbeitungsprogramm jeweils in Abhängigkeit von den Abweichungen der Meßwerte so eingestellt wird, daß sich während der Beschichtung die ursprünglichen Beschichtungsbedingungen ergeben.

2. Verfahren nach Anspruch 1,**dadurch gekennzeichnet,** daß beim Serienbetrieb vor dem Beschichtungsbeginn zunächst die ursprünglich gemessene Entfernung eingestellt wird.

3. Verfahren nach Anspruch 1 oder 2.**dadurch gekennzeichnet,** daß ursprünglich für eine Anzahl unterschiedlicher Abweichungen von dem Standardmeßwert je ein anderes Bearbeitungsprogramm gespeichert und zum Beschichten das der jeweils gemessenen Abweichung entsprechende Programm ausgewählt wird.

4. Verfahren nach Anspruch 1,2 oder 3.**dadurch gekennzeichnet.** daß die Entfernung zwischen einem oder mehreren Bezugspunkten der Sprühvorrichtung und mindestens zwei ausgewählten Punkten des Werkstücks in mindestens zwei voneinander verschiedenen Richtungen gemessen und zur Einstellung des Bearbeitungsprogramms verwendet wird.

5. Verfahren nach einem der vorangehenden Ansprüche, **dadurch gekennzeichnet,** daß quer zu der Förderrichtung und in einer zu der Förderrichtung wenigstens annähernd parallelen Ebene gemessen wird.

6. Verfahren nach einem der vorangehenden Ansprüche, **dadurch gekennzeichnet,** daß mehrere Entfernungsmessungen vorgenommen werden. hieraus ein Mittelwert errechnet wird und aus dem Mittelwert die Abweichung vom Standardmeßwert errechnet wird.

7. Verfahren nach einem der vorangehenden Ansprüche. **dadurch gekennzeichnet,** daß die Entfernung unter Verwendung einer Sende- und Empfangsvorrichtung gemessen wird, welche die Zeit zwischen dem Aussenden und dem Empfang eines von dem Werkstück reflektierten Signals feststellt.

8. Beschichtungsanlage zum Durchführen des Verfahrens nach einem der vorangehenden Ansprüche. **dadurch gekennzeichnet,** daß zum Messen der Entfernungen zwischen den ortsfesten Bezugspunkten (10,12) und den Werkstücken (2,2′) je ein gepulstes Laser-Entfernungsmeßsystem (7,8) vorgesehen ist.

9. Beschichtungsanlage nach Anspruch 8.**dadurch gekennzeichnet,** daß zwei oder mehr LaserEntfernungsmeßsysteme (7,8) örtlich voneinander entfernt an oder in der Beschichtungsstation (1) montiert sind.

FIG. 1

# FIG. 2

# FIG. 3